# EUROPEAN PATENT SPECIFICATION

(11) **EP 1 867 816 B1**
(45) Date of publication and mention of the grant of the patent: **30.07.2008**
(21) Application number: 07106008.1
(22) Date of filing: 12.04.2007
(51) Int. Cl.: E05B 73/00

(54) **Lockable holder**
Blockierbarer Halter
Porte-objet verrouillable

(30) Priority: 12.04.2006 JP 2006133084
(43) Date of publication of application: 19.12.2007
(73) Proprietor: Washin Optical Co., Limited, Chuo-ku Tokyo 104-0061 (JP)
(72) Inventor: Saitoh, Masatoshi, Saitama-ken Saitama 330-0052 (JP); Negishi, Tohru, Saitama-ken Saitama 331-0805 (JP)
(74) Representative: Gill, David Alan

(56) References cited:
- EP-A- 0 615 041
- EP-A- 1 355 027
- WO-A-99/36653
- US-B1- 6 276 033

## Description

The present invention generally relates to holders and more specifically, to a lockable holder which is locked, for example, to a merchandise item to hold a price or security tag.

In an optical store, a typical security tag is directly attached to one of the temples of an eyeglass by tape. Such attachment not only disrupts an esthetic appearance, but also is unreliable. United States Patent No. 6,276,033 discloses a security tag holder which includes a housing within which a security tag is contained. The housing is attached to one of the temples of an eyeglass frame by a pair of clips. The housing and the clips present a better appearance than the security tag directly attached to the temple by tape. However, the use of the clips results in a limited number of applications. The housing and the clips may be removed from the temple by a specialized tool. This removal must be accomplished by destroying the clips. Although the housing and the security tag are reusable, the clips must be replaced.

Accordingly, it is an object of the present invention to provide a lockable holder having advantages over known such lockable holders.

According to the present invention, there is provided a lockable holder which includes a body defining a cavity, a recess communicated with the cavity, and a first magnetic element. A clamping member is removably insertable into the cavity and has a bore. A locking member is partly extractable from and fully retractable into the bore. The locking member includes a second magnetic element movable between an unlocking position wherein the second magnetic element is fully received within the bore and a locking position wherein the second magnetic element is partly extracted from the bore, and the partly extracted portion of the second magnetic element is inserted into the recess of the body. The body includes a clamping surface located adjacent to the cavity and at least one guide passage adapted to receive an object to be clamped. When the clamping member is operatively associated with the clamping surface of the body to clamp the object therebetween, the second magnetic element is moved from its unlocking to locking position and magnetically attracted to the first magnetic element to lock the clamping member in position. This feature enables the lockable holder to be readily and securely locked to various articles or objects.

The present invention can advantageously provide for a lockable holder which is readily and securely lockable to a wide variety of items or articles.

In one embodiment, the body includes two guide passages defined at opposite sides of the cavity and connected thereto, and an elongated element as an object to be clamped. The elongated element has one end secured to the body and an opposite free end. The free end of the elongated element is wound around an article, such as an eyeglass temple, to which the lockable holder is locked. The free end of the elongated element is then inserted into the body through one of the guide passages. After the free end of the elongated element is advanced out of the other guide passage, the free end of the elongated element is pulled away from the body so as to securely lock the body to the article. The clamping member is thereafter inserted into the cavity to clamp the elongated element between the clamping end of the clamping member and the clamping surface. Then, the second magnetic element is partly extracted from the bore and magnetically attracted to the first magnetic element. This movement of the second magnetic element enables latching engagement of the clamping member within the body and thus, ensures locking of the lockable holder to the article. The use of the elongated element enables the lockable holder to hold items or articles of various sizes and shapes.

To release the clamping member from its latched position, a separate key is inserted into a release hole which is defined in the body and is connected to the recess. The insertion of the key causes the second magnetic element to be moved from its locking to unlocking position. Alternatively, a release member may be partly inserted into the release hole. In such a case, the release member may have a rod and opposite enlarged heads connected to opposite ends of the rod. One of the enlarged heads which is located externally of the body may be gripped and pushed toward the body so as to urge the second magnetic element from its locking to unlocking position. This arrangement allows the lockable holder to be unlocked from an article to which it is locked, without destroying any part of the lockable holder.

In another embodiment, a discrete elongated element is employed. The elongated element is folded in an overlapping relationship to form at its one end with a loop through which an article, such as an eyeglass temple, extends. The other, free end of the elongated element as folded is passed through the body. Thereafter, the free end of the elongated element is pulled away from the body to securely lock the lockable holder to the article. This arrangement avoids the need to fixedly secure one end of the elongated element to the body.

In an alternative embodiment, the body has a single guide passage through which an object to be clamped is inserted. In this case, the object per se constitutes a part of an article to which the lockable holder is locked.

The present invention may be best understood by reference to the following description when taken in conjunction with the accompanying drawings in which:
Fig. 1 is a perspective view of an eyeglass with a lockable holder according to one embodiment of the present invention being secured to one of the temples of the eyeglass;
Fig. 2 is an exploded perspective view, on a slightly enlarged scale, of the lockable holder shown in Fig. 1;
Fig. 3 is a perspective view, on an enlarged scale, of the lockable holder, with a holder extension removed for clarity, before a strap is wound around the temple;
Fig. 4 is a view similar to that of Fig. 3, but showing that the strap is tightly wound around the temple;
Fig. 5 is a view similar to that of Fig. 3, but showing that a clamping member is partly inserted into the cavity of a holder body;
Fig. 6 is a vertical sectional view taken on the line VI-VI in Fig. 5;
Fig. 7 is a view similar to that of Fig. 5, but showing that the clamping member is fully inserted into the cavity of the holder body;
Fig. 8 is a vertical sectional view taken on the line VIII-VIII in Fig. 7;
Fig. 9 is a longitudinal sectional view showing that a key is inserted into the holder body;
Fig. 10 is a sectional view taken on the line X-X in Fig. 7;
Fig. 11 is a view similar to that of Fig. 10, but showing a modified form of the clamping member;
Fig. 12 is a view similar to that of Fig. 10, but showing a modified form of the strap;
Fig. 13 is a perspective view of a table lamp with a lockable holder according to another embodiment of the present invention being secured to a lamp pole and adapted to hold a lamp shade;
Fig. 14 is an enlarged sectional view taken on the line XIV-XIV in Fig. 13; and
Fig. 15 is a perspective view, in part, of a computer rack with a lockable holder according to a further embodiment of the invention being secured thereto.

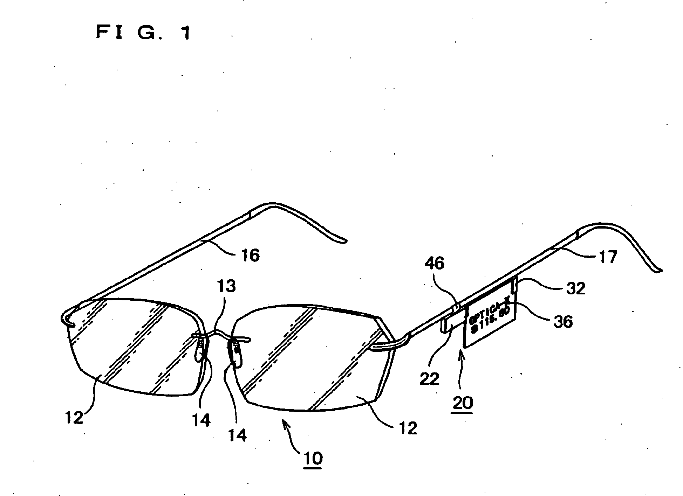

Fig. 1 illustrates an eyeglass 10 with a pair of rimless lenses 12, 12 interconnected by a bridge 13. A pair of nose pads 14, 14 are secured to the bridge 13. A pair of temples 16, 17 extend rearwardly from the respective lenses 12, 12. A lockable holder 20 made according to one embodiment of the present invention is locked to the temple 17. Illustratively, the lockable holder 20 serves as a security tag holder.

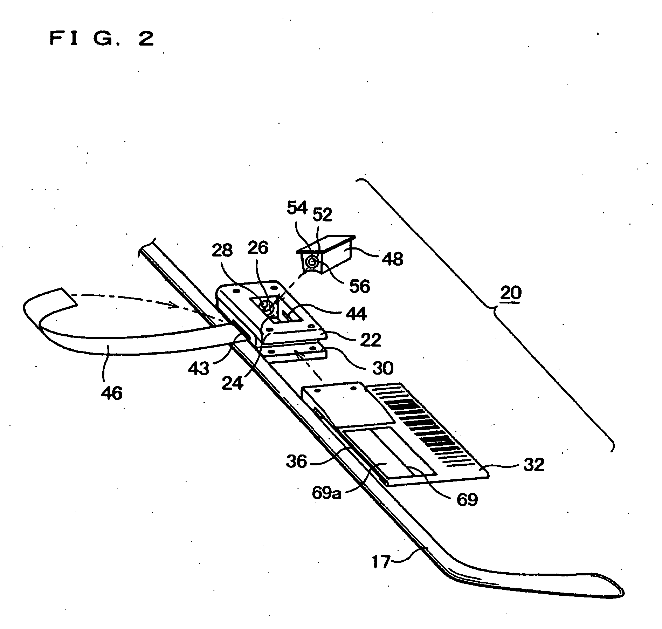

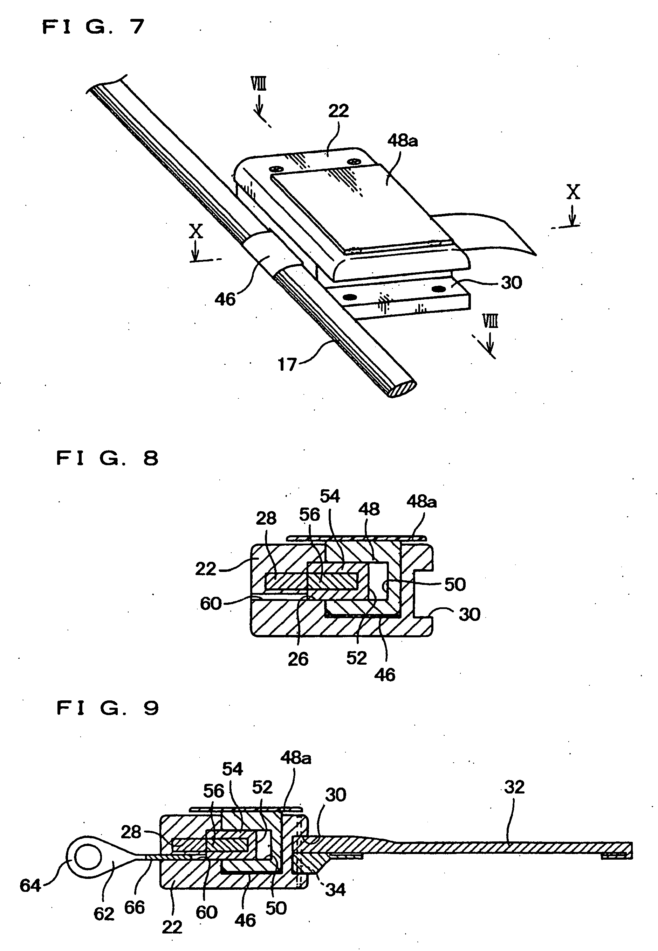

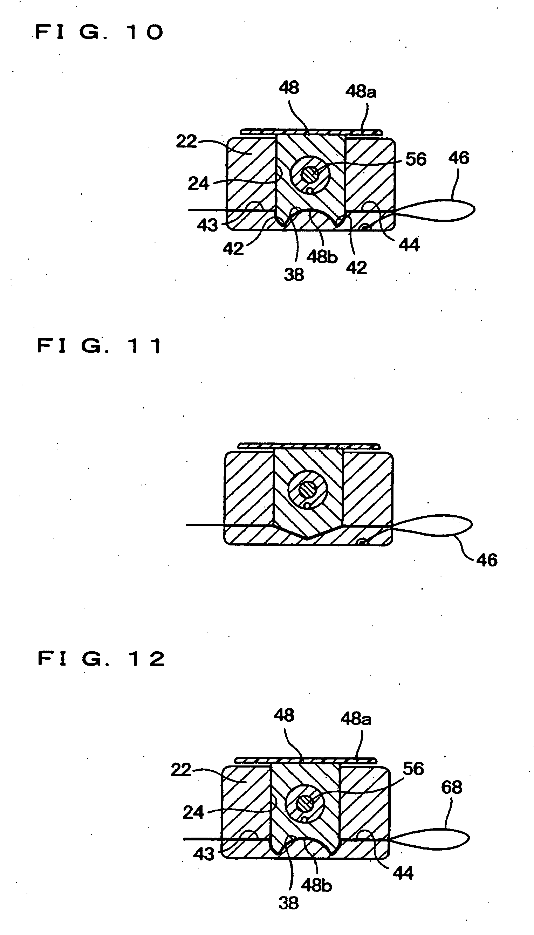

As shown in Fig. 2, the lockable holder 20 includes a generally rectangular body 22 made, for example, of rigid plastic. A generally rectangular cavity 24 is defined in the body 22, and a cylindrical recess 26 is defined adjacent to and communicated with the cavity 24. A permanent magnet 28 is embedded in the body 22 and exposed to the recess 26. The body 22 is formed at its one side with a transverse groove 30. A rectangular holder extension or plate 32 has one end inserted into the groove 30 and secured to the body 22 by screws 34 (see Fig. 9). As shown better in Fig. 1, a price tag 36 is mounted on the holder plate 32 and contains price and bar code information. The body 22 defines a clamping surface 38 at the bottom of the cavity 24 as shown best in Fig. 10. The clamping surface 38 is arcuately convexed and has opposite grooves 42, 42. The body 22 has opposite guide passages 43, 44 defined at opposite sides of the cavity 24 and connected to the clamping surface 38 and the cavity 24. Referring back to Fig. 2, a flat elongated element or flexible strap 46 has one end secured to one side of the body 22 adjacent to the guide passage 43 and an opposite free end. The narrow strap 46 is made, for example, of a resinous material such that it sufficiently resists a transverse tearing force. The strap 46 may alternatively be made of a metal as far as the strap is flexible. The opposite guide passages 43, 44 are both sized to allow the strap 46 to pass through the body 22 via the cavity 24.

A generally rectangular clamping member 48 is made, for example, of rigid plastic and removably insertable into the cavity 24. The clamping member 48 has a cylindrical bore 50. A locking member 52 is partly extractable from and fully retractable into the bore 50. The locking member 52 includes a hollow cylindrical magnet case 54 and a permanent magnet 56 received in the magnet case 54 and movable between an unlocking position wherein the magnet case 54 and the magnet 56 are fully received within the bore 50 and a locking position wherein the magnet case 54 and the magnet 56 are partly extracted from the bore 50, and those partly extracted portions of the magnet case 54 and the magnet 56 are inserted into the recess 26. The clamping member 48 has a rectangular gripping end 48a and an opposite clamping end 48b. The clamping end 48b of the clamping member 48 is arcuately concaved at its center to form opposite projections 58, 58. When the clamping member 48 is fully inserted into the cavity 24, the projections 58, 58 are received within the respective grooves 42, 42 of the clamping surface 38 of the body 22. The permanent magnets 28, 56 have opposite polarities so that the magnets 28, 56 are magnetically attracted to each other when the magnet 56 is partly extracted from the bore 50 and moved into the recess 26, as will later be described in more detail. It should be understand that one of the magnets 28, 56 may be made of a ferromagnetic material.

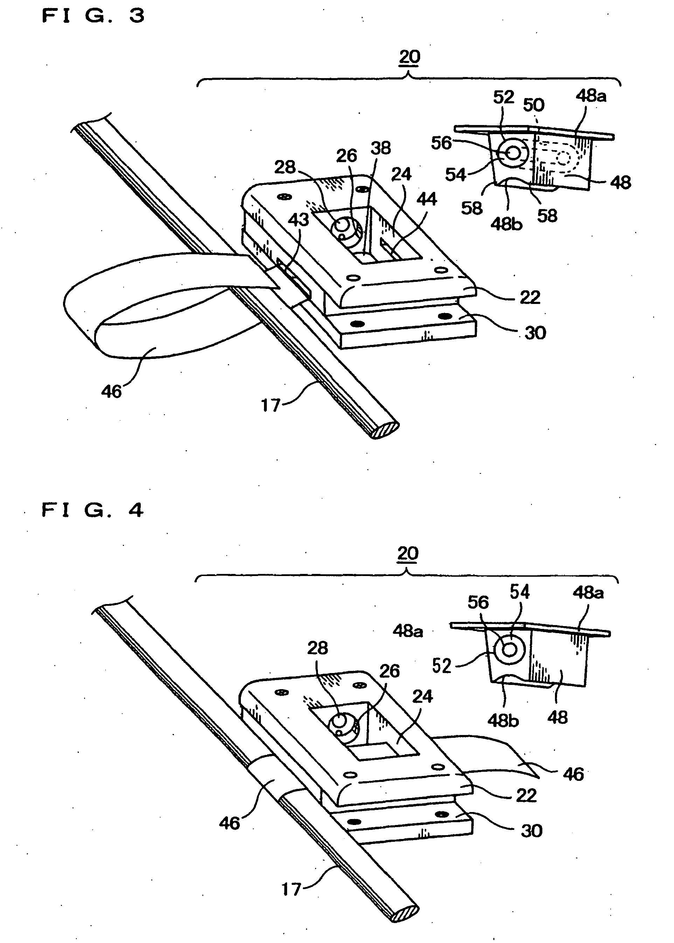

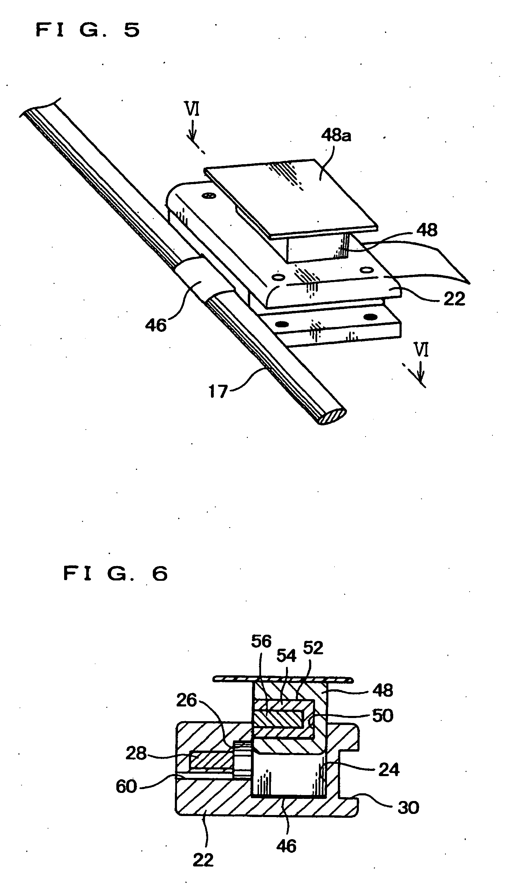

Figs. 3 to 8 illustrate the manner in which the lockable holder 20 is locked to one of the temples of the eyeglass 10. As shown in Fig. 3, the free end of the strap 46 is so turned as to extend around the temple 17. At this time, the clamping member 48 is separated from the body 22. The free end of the strap 46 is inserted into the body 22 through the guide passage 43. The free end of the strap 46 is further inserted until it projects from the guide passage 44, as shown in Fig. 4. The free end of the strap 46 is thereafter pulled away from the body 22 until the strap 46 is tightly wound around the temple 17 so as to secure the lockable holder 20 to the temple 17. Referring to Fig. 5, the clamping member 48 is inserted into the cavity 24 after the strap 46 is tightly wound around the temple 17. During initial insertion of the clamping member 48, the permanent magnet 56 is held in its unlocking position wherein the magnet case 54 and the magnet 56 are fully received within the bore 50. When the clamping member 48 is further inserted into the cavity 24 until the clamping end 48b of the clamping member 48 is urged against the clamping surface 38 of the body 22, as shown in Figs. 7 and 8, the magnet case 54 is aligned with the recess 26. This alignment causes the magnet 56 to be moved from its unlocking position to locking position. That is, the magnet case 54 and the magnet 56 are partly extracted from the bore, and those partly extracted portions of the magnet case 54 and the magnet 56 are inserted into the recess 26. As a result, the magnet 56 is magnetically attracted to the magnet 28 to latchingly lock the clamping member 48 in position within the cavity 24 and thus ensure locking of the lockable holder 20 to the temple 17.

To release the lockable holder 20 from the temple 17, the body 22 has a release hole 60 connected to the recess 26. As shown in Fig. 9, a key 62 includes a gripping head 64 and a pin 66 connected to the gripping head 64. The pin 66 is inserted into the release hole 60 until the magnet 56 is returned to its unlocking position. This allows the clamping member 48 to be removed from the cavity 24.

Figs. 11 and 12 illustrate modified forms of the lockable holder shown in Figs. 1 to 10. Like elements are given like reference numerals used in Figs. 1 to 10. In the embodiment shown in Figs. 1 to 10, the clamping end 48b of the clamping member 48 has an arcuately concaved section. The clamping end may have any other shape. For example, the clamping end may have a triangularly convexed section, as shown in Fig. 11. In such a case, the clamping surface 38 of the body 22 may have a triangularly concaved section. Also, in the embodiment shown in Figs. 1 to 10, one end of the strap 46 is secured to the body 22. However, a discrete strap 68 may be employed as shown in Fig. 12. Specifically, one end of the strap 68 is first inserted into the body 22 through the guide passage 43. The end of the strap 68 is then moved through the cavity 24. After the end of the strap 68 is moved out of the guide passage 44, the end of the strap 68 is wound around the temple 17 (not shown in Fig. 12). The end of the strap 68 is thereafter moved back into the body 22 through the guide passage 44. The end of the strap 68 is then moved through the cavity 24 and finally, out of the guide passage 43. Alternatively, the strap 68 may be folded in an overlapping relation before the strap 68 is inserted through the holder body 22. Opposite free ends of the folded strap 68 may be inserted into the body 22 from either the guide passage 43 or the guide passage 44.

Referring back to Fig. 2, a magnetic antenna 69 is placed on the holder extension 32 to provide a security tag. An adhesive sheet 69a is used to hold the magnetic antenna in place. Although not specifically shown in the drawings, sensors may be incorporated into a security gate in an optical store. When the security tag holder attached to the eyeglass is caused to pass through the security gate, the sensors are operable to sense the presence of the magnetic antenna and activate an alarm and other signal.

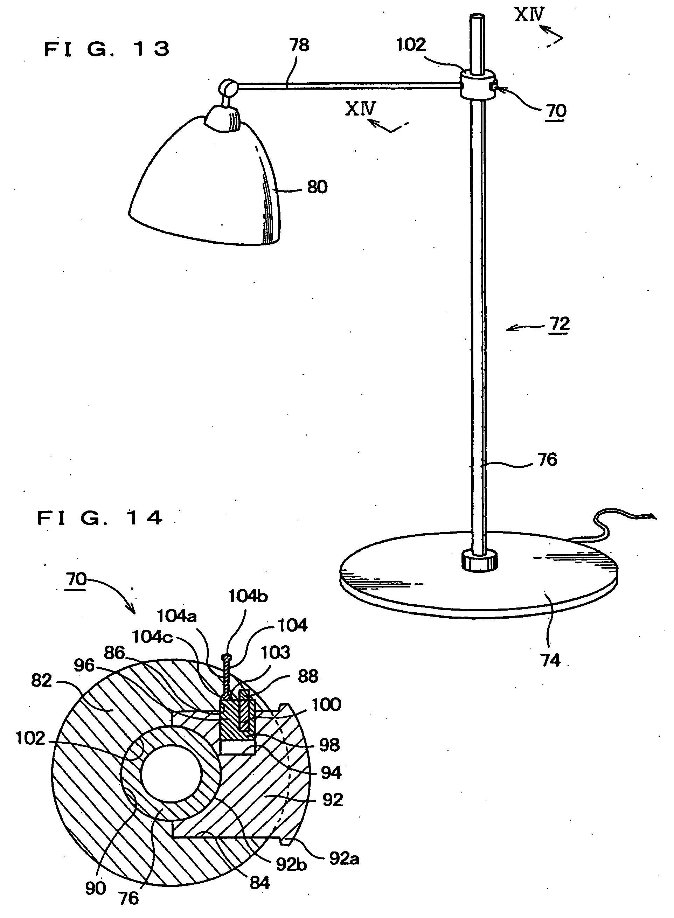

Referring now to Fig. 13, the present invention is applied to a lockable lamp holder 70. This embodiment does not require the use of a strap. Specifically, a table lamp 72 has a circular lamp base 74 and a vertical pole 76 connected to the base 74. The lockable lamp holder 70 is adjustably fit on the pole 76. The lamp holder 70 has a holder extension or rod 78. A lamp shade 80 and a light bulb (not shown) are pivotably supported by the distal end of the holder extension 78. As shown better in Fig. 14, the lockable lamp holder 70 includes a cylindrical body 82. A cavity 84 is defined in the body 82, and a cylindrical recess 86 is defined adjacent to and communicated with the cavity 84. A permanent magnet 88 is embedded in the body 82 and exposed to the recess 86. The body 82 has a semicircular clamping surface 90 at the bottom of the cavity 84. As in the previous embodiment, a clamping member 92 includes a bore 94 within which a locking member 96 is received. The locking member 96 includes a magnet case 98 and a permanent magnet 100 contained in the magnet case 98. The locking member 96 is partly extractable from and retractable into the bore 94. The clamping member 92 has a gripping end 92a and an opposite clamping end 92b. The clamping end 92b of the clamping member 92 has a semicircular section. The permanent magnets 88, 100 have opposite polarities.

The body 82 has a through guide passage 102 connected to the cavity 84. To attach the lockable lamp holder 70 to the pole 76, the pole 76 is inserted through the guide passage 102 and the cavity 84. The body 82 is slidably movable along the pole 76. The body 82 can thus be attached to any desired height of the pole 76. After the body 82 is placed on a desired height of the pole 76, the clamping member 92 is inserted into the cavity 84 until the clamping end 92b of the clamping member 92 is urged against the peripheral surface of the pole 76. When the clamping end 92b is brought into engagement with the pole 76, the magnet case 98 is aligned with the recess 86. Due to magnetic attraction between the magnets 88, 100, the magnet case 98 and the magnet 100 are partly extracted from the bore 94 of the clamping member 92, and those partly extracted portions of the magnet case 98 and the magnet 100 are inserted into the recess 86 of the body 82. The magnet 100 is then magnetically attracted to the magnet 88. This prevents removal of the clamping member 92 from the cavity 84 and ensures locking of the lockable lamp holder 70 to the pole 76.

A release hole 103 is defined in the body 82 and extends between the outer periphery of the body 82 and the bottom of the recess 86. The release hole 103 has an outer end and an inner end. The inner end of the release hole 103 has a larger diameter than the rest of the release hole 103. A release member 104 is partly inserted into the release hole 103. The release member 104 includes a rod 104a and opposite enlarged heads 104b, 104c connected to opposite ends of the rod 104a. When the magnet 100 is in its locking position as shown in Fig. 14, the enlarged head 104c is received within the inner end of the release hole 103, and the enlarged head 104b is separated from the outer periphery of the body 82. To change the height of the lockable lamp holder 70, the enlarged head 104b is pressed toward the body 82 until the head 104b is brought into contact with the outer periphery of the body 82. The enlarged head 104c then causes the magnet 100 to be moved out of the recess 86 and back to its unlocking position. This allows the clamping member 92 to be removed from the cavity 84. The entire body 82 is vertically moved to a desired height of the pole. The clamping member 92 is thereafter pushed back into the cavity 84 until the clamping end of the clamping member 92 is urged against the outer periphery of the pole 76. The magnet 100 is then moved from its unlocking to locking position to latchingly lock the clamping member 92 in position.

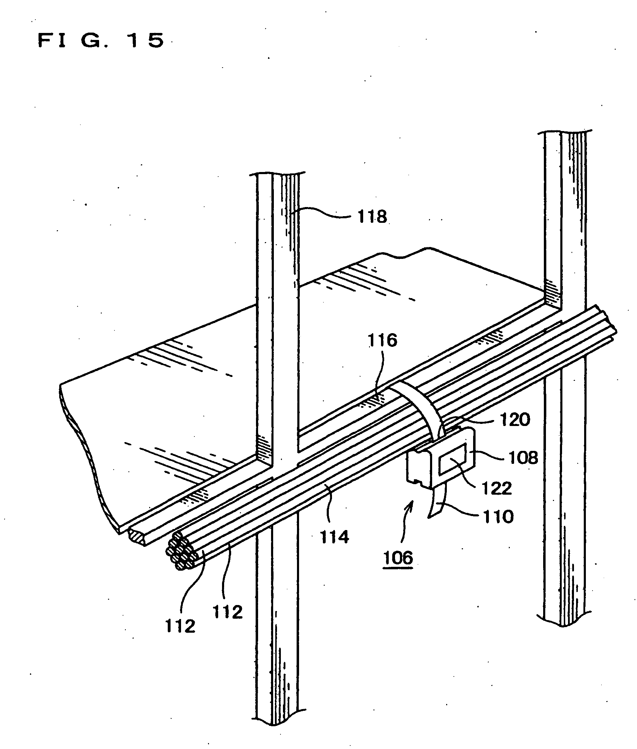

Referring next to Fig. 15, the present invention is applied to a lockable cable tie 106 for forming a plurality of computer cables into a bundle and locking the bundle to a computer rack. Specifically, the lockable cable tie 106 has a rectangular body 108. The structure of the body 108 is generally similar to that of the body 22 shown in Figs. 1 to 10 and will not be described herein. As in the embodiment shown in Figs. 1 to 10, a strap 110 has one end secured to the body 108 and an opposite free end. The free end of the strap 110 is first wound around a plurality of computer cables 112 to form a bundle 114. The strap 110 is then wound around a part 116 of a computer rack 118. The free end of the strap 110 is thereafter inserted into the body 108 through a guide passage 120. The free end of the strap 110 is pulled out of the body 108 to secure the bundle 114 to the computer rack 118. A clamping member 122 is then inserted into the body 108. Although not shown in Fig. 15, a locking member received in the clamping member 122 is operated in the same manner as that shown in Figs. 1 to 10 to lock the clamping member in position.

## Claims

1. A lockable holder (20, 70, 106) including a body (22, 82, 108) defining a cavity (24, 84) and a recess (26, 86) in communication with said cavity (24 84), said body (22, 82, 108) including a first magnetic element (28, 88), a clamping member (48, 92, 122) removably insertable into said cavity (24, 84) and having a bore (50, 94), and a locking member (52, 96) including a second magnetic element (56, 100) movable between an unlocking position wherein said second magnetic element (56, 100) is received within said bore (50, 94) and a locking position wherein said second magnetic element (56, 100) is partly extracted from said bore (50, 94), and said partly extracted portion of said second magnetic element (56, 100) is inserted into said recess (26, 86, 108) of said body (22, 82, 108), **characterised in that**
said body (22, 82, 108) includes a clamping surface (38, 90) located adjacent to said cavity (24, 84) and at least one guide passage (43, 44, 102) adapted to receive an object (46, 76, 110) to be clamped, and wherein
said second magnetic element (56, 100) is arranged to be moved from said unlocking position to said locking position and magnetically attracted to said first magnetic element (28, 88) to lock said clamping member (48, 92, 122) in position when said clamping member (48, 92, 122) is operatively associated with said clamping surface (38, 90) of said body (22, 82, 108) to clamp the object (46, 76, 110) therebetween.

2. A lockable holder according to Claim 1, **characterised in that** said body (22) includes two guide passages (43, 44) defined at opposite sides of said cavity (24) and connected to said cavity (24), and an elongate element (46) sized to pass through said two guide passages (43, 44) and constituting the object (46), said elongate element (46) having one end secured to said body (22) and an opposite free end.

3. A lockable holder according to Claim 1 or 2, **characterised in that** said first and second magnetic elements (28, 56, 88, 100) are permanent magnets.

4. A lockable holder according to Claim 1 or 2, **characterised in that** one of said first and second magnetic elements (28, 56, 88, 100) is a permanent magnet, and the other magnetic element is made of a ferromagnetic material.

5. A lockable holder according to any one or more of Claims 1 to 4, **characterised in that** said clamping member (48) has a gripping end (48a), and an opposite clamping end (48b), and wherein said clamping end (48b) of said clamping member (48) has a concave configuration, and said clamping surface (38) of said body (22) has a convex configuration.

6. A lockable holder according to any one of Claims 1 to 4, **characterised in that** said clamping member (48) has a gripping end (48a), and an opposite clamping end (48b), and wherein said clamping end (48b) of said clamping member (48) has a convex configuration, and said clamping surface (48b) of said body (22) has a concave configuration.

7. A lockable holder according to Claim 1, **characterised in that** said body (22) has two guide passages (43, 44) defined at opposite sides of said cavity (24) and connected to said cavity (24), further including a discrete elongate element (68) sized to pass through said two guide passages (43, 44) and constituting the object (46).

8. A lockable holder according to Claim 7, **characterised in that** said discrete elongate element (68) is folded in an overlapping relationship when said discrete elongated element (68) is passed through said two guide passages (43, 44).

9. A lockable holder according to any one or more of Claims 1 to 8, **characterised in that** said body (22, 82) includes a release hole (60, 103) in communication with said recess (26, 86).

10. A lockable holder according to Claim 9, **characterised by** a discrete key (62) removably insertable into said release hole (60) so as to urge said second magnetic element (28) from said locking position to said unlocking position.

11. A lockable holder according to Claim 9, **characterised in that** said body (82) includes a release member (104) partly inserted into said release hole (103) to urge said second magnetic element (88) from said locking position to said unlocking position.

12. A lockable holder according to Claim 11, **characterised in that** said release member (104) includes a rod (104a) and opposite enlarged heads (104b, 104c) connected to opposite ends of said rod (104a), one (104c) of said enlarged heads being located internally of said release hole (103), and the other enlarged head (104b) being located externally of said body (82).

## Patentansprüche

1. Verschließbarer Halter (20, 70, 106), der einen Körper (22, 82, 108), welcher einen Hohlraum (24, 84) und eine Ausnehmung (26, 86) in Kommunikation mit dem Hohlraum (24, 84) begrenzt, wobei der Körper (22, 82, 108) ein erstes Magnetelement (28, 88), ein Einspannelement (48, 92, 122), das entfernbar in den Hohlraum (24, 84) eingeführt werden kann und eine Bohrung (50, 94) aufweist, und ein Verriegelungselement (52, 96) umfasst, welches ein zweites Magnetelement (56, 100) einschließt, das zwischen einer Entriegelungsposition, in der das zweite Magnetelement (56, 100) in der Bohrung (50, 94) aufgenommen wird, und einer Verriegelungsposition bewegbar ist, in der das zweite Magnetelement (56, 100) teilweise aus der Bohrung (50, 94) herausgezogen wird und der teilweise herausgezogene Teil des zweiten Magnetelements (56, 100) in die Ausnehmung (26, 86, 108) des Körpers (22, 82, 108) eingeführt wird, **dadurch gekennzeichnet, dass**
der Körper (22, 82, 108) eine Einspannfläche (38, 90), die angrenzend an den Hohlraum (24, 84) angeordnet ist, und wenigstens einen Führungsdurchgang (43, 44, 102) umfasst, der zum Aufnehmen eines einzuspannenden Gegenstands (46, 76, 110) angepasst ist, und wobei
das zweite Magnetelement (56, 100) eingerichtet ist, um aus der Entriegelungsposition in die Verriegelungsposition bewegt und magnetisch von dem ersten Magnetelement (28, 88) angezogen zu werden, um das Einspannelement (48, 92, 122) an richtiger Stelle zu verriegeln, wenn das Einspannelement (48, 92, 122) operativ mit der Einspannfläche (38, 90) des Körpers (22, 82, 108) zum Einspannen des Gegenstands (46, 76, 100) zwischen denselben verknüpft ist.

2. Verriegelbarer Halter nach Anspruch 1, **dadurch gekennzeichnet, dass** der Körper (22) zwei Führungsdurchgänge (43, 44), die an gegenüberliegenden Seiten des Hohlraums (24) definiert sind und mit dem Hohlraum (24) verbunden sind, und ein Langelement (46) mit Abmessungen zum Durchqueren der beiden Führungsdurchgänge (43, 44) umfasst, welches den Gegenstand (46) bildet, wobei das Langelement (46) ein an dem Körper (22) befestigtes Ende und ein entgegengesetztes freies Ende aufweist.

3. Verriegelbarer Halter nach Anspruch 1 oder 2, **dadurch gekennzeichnet, dass** das erste und das zweite Magnetelement (28, 56, 88, 100) Dauermagneten sind.

4. Verriegelbarer Halter nach Anspruch 1 oder 2, **dadurch gekennzeichnet, dass** entweder das erste oder das zweite Magnetelement (28, 56, 88, 100) einen Dauermagneten darstellt, und das andere Magnetelement aus einem Ferromagnetikum besteht.

5. Verriegelbarer Halter nach einem oder mehreren der Ansprüche 1 bis 4, **dadurch gekennzeichnet, dass** das Einspannelement (48) ein Greifende (48a) und ein gegenüberliegendes Einspannende (48b) aufweist, und wobei das Einspannende (48b) des Einspannelements (48) eine konkave Konfiguration hat, und die Einspannfläche (38) des Körpers (22) eine konvexe Konfiguration hat.

6. Verriegelbarer Halter nach einem der Ansprüche 1 bis 4, **dadurch gekennzeichnet, dass** das Einspannelement (48) ein Greifende (48a) und ein gegenüberliegendes Einspannende (48b) aufweist, und wobei das Einspannende (48b) des Einspannelements (48) eine konvexe Konfiguration hat und die Einspannfläche (48b) des Körpers (22) eine konkave Konfiguration hat.

7. Verriegelbarer Halter nach Anspruch 1, **dadurch gekennzeichnet, dass** der Körper (22) zwei Führungsdurchgänge (43, 44) aufweist, die an gegenüberliegenden Seiten des Hohlraums (24) definiert sind und mit dem Hohlraum (24) verbunden sind, und ferner ein getrenntes Langelement (68) mit Abmessungen zum Durchqueren der beiden Führungsdurchgänge (43, 44) umfasst, welches den Gegenstand (46) bildet.

8. Verriegelbarer Halter nach Anspruch 7, **dadurch gekennzeichnet, dass** das getrennte Langelement (68) in einem überlappenden Verhältnis gefaltet wird, wenn das getrennte Langelement (68) durch die beiden Führungsdurchgänge (43, 44) geführt wird.

9. Verriegelbarer Halter nach einem oder mehreren der Ansprüche 1 bis 8, **dadurch gekennzeichnet, dass** der Körper (22, 82) ein Freigabeloch (60, 103) in Kommunikation mit der Ausnehmung (26, 86) aufweist.

10. Verriegelbarer Halter nach Anspruch 9, **gekennzeichnet durch** einen getrennten Schlüssel (62), der lösbar in das Freigabeloch (60) einführbar ist, um so das zweite Magnetelement (28) aus der Verriegelungsposition in die Entriegelungsposition zu drängen.

11. Verriegelbarer Halter nach Anspruch 9, **dadurch gekennzeichnet, dass** der Körper (82) ein Freigabeelement (104) umfasst, das teilweise in das Freigabeloch (103) eingeführt wird, um das zweite Magnetelement (88) aus der Verriegelungsposition in die Entriegelungsposition zu drängen.

12. Verriegelbarer Halter nach Anspruch 11, **dadurch gekennzeichnet, dass** das Freigabeelement (104) einen Stab (104a) und gegenüberliegende vergrößerte Köpfe (104b, 104c) umfasst, die mit gegenüberliegenden Enden des Stabs (104a) verbunden sind, wobei einer (104c) der vergrößerten Köpfe sich innerhalb des Freigabelochs (103) befindet, und der andere vergrößerte Kopf (104b) sich außerhalb des Körpers (82) befindet.

## Revendications

1. Support verrouillable (20, 70, 106) comprenant un boîtier (22, 82, 108) délimitant une cavité (24, 84) et un renfoncement (26, 86) en communication avec ladite cavité (24, 84), ledit boîtier (22, 82, 108) comprenant un premier élément magnétique (28, 88), un organe de serrage (48, 92, 122) pouvant être inséré de manière amovible dans ladite cavité (24, 84) et doté d'une âme (50, 94), et d'un organe de verrouillage (52, 96) comprenant un deuxième élément magnétique (56, 100) mobile entre une position de déverrouillage où ledit deuxième élément magnétique (56, 100) est reçu dans ladite âme (50, 94) et une position de verrouillage où ledit deuxième élément magnétique (56, 100) est extrait en partie de ladite âme (50, 94), et ladite partie extraite en partie dudit deuxième élément magnétique (56, 100) est insérée dans ledit renfoncement (26, 86, 108) dudit boîtier (22, 82, 108), **caractérisé par le fait que** :
ledit boîtier (22, 82, 108) comporte une surface de serrage (38, 90) située en position adjacente à ladite cavité (24, 84) et au moins un passage de guidage (43, 44, 102) adapté pour recevoir un objet (46, 76, 110) à serrer, et où
ledit deuxième élément magnétique (56, 100) est disposé pour être déplacé depuis ladite position de déverrouillage à ladite position de verrouillage et être magnétiquement attiré vers le premier élément magnétique (28, 88) pour verrouiller ledit organe de serrage (48, 92, 122) en position quand ledit organe de serrage (48, 92, 122) est associé fonctionnellement avec ladite surface de serrage (38, 90) dudit boîtier (22, 82, 108) pour serrer l'objet (46, 76, 110) entre ceux-ci.

2. Support verrouillable conforme à la revendication 1, **caractérisé en ce que** ledit boîtier (22) comporte deux passages de guidage (43, 44) délimités à des côtés opposés de ladite cavité (24) et connectés à ladite cavité (24), et un élément allongé (46) de taille lui permettant de passer au travers desdits deux passages de guidage (43, 44) et constituant l'objet (46), ledit élément allongé (46) ayant une extrémité fixée audit boîtier (22) et une extrémité opposée libre.

3. Support verrouillable conforme à la revendication 1 ou 2, **caractérisé en ce que** lesdits premier et deuxième éléments magnétiques (28, 56, 88, 100) sont des aimants permanents.

4. Support verrouillable conforme à la revendication 1 ou 2, **caractérisé en ce qu'**un desdits premier et deuxième éléments magnétiques (28, 56, 88, 100) est un aimant permanent, et l'autre élément magnétique est en matériau ferromagnétique.

5. Support verrouillable conforme à une quelconque ou plusieurs des revendications 1 à 4, **caractérisé en ce que** ledit organe de serrage (48) a une extrémité de prise (48a), et une extrémité opposée de serrage (48b), et où ladite extrémité de serrage (48b) dudit organe de serrage (48) a une configuration concave, et ladite surface de serrage (38) dudit boîtier (22) a une configuration convexe.

6. Support verrouillable conforme à une quelconque des revendications 1 à 4, **caractérisé en ce que** ledit organe de serrage (48) a une extrémité de prise (48a), et une extrémité opposée de serrage (48b), et où ladite extrémité de serrage (48b) dudit organe de serrage (48) a une configuration convexe, et ladite surface de serrage (48b) dudit boîtier (22) a une configuration concave.

7. Support verrouillable conforme à la revendication 1, **caractérisé en ce que** ledit boîtier (22) a deux passages de guidage (43, 44) délimités à des extrémités opposées de ladite cavité (24) et connectés à ladite cavité (24), comprenant en outre un élément allongé séparé (68) de taille lui permettant de passer à travers les deux passages de guidage (43, 44) et constituant l'objet (46).

8. Support verrouillable conforme à la revendication 7, **caractérisé en ce que** ledit élément allongé séparé (68) est plié de manière à se chevaucher quand ledit élément allongé séparé (68) est passé à travers lesdits deux passages de guidage (43,44).

9. Support verrouillable conforme à une quelconque ou plusieurs des revendications 1 à 8, **caractérisé en ce que** ledit boîtier (22, 82) comprend un trou de dégagement (60, 103) en communication avec ledit renfoncement (26, 86).

10. Support verrouillable conforme à la revendication 9, **caractérisé par** une clé séparée (62) pouvant être insérée de manière amovible dans ledit trou de dégagement (60) de manière à inciter ledit deuxième élément magnétique (28) à passer de ladite position de verrouillage à ladite position de déverrouillage.

11. Support verrouillable conforme à la revendication 9, **caractérisé en ce que** ledit boîtier (82) comprend un organe de dégagement (104) inséré en partie dans ledit trou de dégagement (103) pour inciter ledit deuxième élément magnétique (88) à passer de ladite position de verrouillage à ladite position de déverrouillage.

12. Support verrouillable conforme à la revendication 11, **caractérisé en ce que** ledit organe de dégagement (104) comprend une tige (104a) et des têtes élargies opposées (104b, 104c) connectées à des extrémités opposées de ladite tige (104a), une (104c) desdites têtes élargies étant située à l'intérieur dudit trou de dégagement (103), et l'autre tête élargie (104b) étant située à l'extérieur dudit boîtier (82).
